(19) Europäisches Patentamt
European Patent Office
Office européen des brevets

(11) **EP 4 495 641 A1**

(12) **EUROPEAN PATENT APPLICATION**
published in accordance with Art. 153(4) EPC

(43) Date of publication:
**22.01.2025 Bulletin 2025/04**

(21) Application number: **22932334.0**

(22) Date of filing: **15.12.2022**

(51) International Patent Classification (IPC):
**G02B 5/22** $^{(2006.01)}$     **G02C 7/00** $^{(2006.01)}$

(52) Cooperative Patent Classification (CPC):
**G02B 5/22; G02C 7/00**

(86) International application number:
**PCT/JP2022/046173**

(87) International publication number:
**WO 2023/176071 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.03.2022 JP 2022040322**

(71) Applicant: **SUMITOMO Chemical Company, Limited
Tokyo 103-6020 (JP)**

(72) Inventor: **KADOYA, Hidenori
Niihama-shi, Ehime 792-8521 (JP)**

(74) Representative: **Winter, Brandl - Partnerschaft
mbB
Alois-Steinecker-Straße 22
85354 Freising (DE)**

(54) **METHACRYLIC RESIN COMPOSITION, COLOR BLINDNESS CORRECTION LENS, AND OPTICAL TOOL FOR COLOR BLINDNESS CORRECTION**

(57)     Disclosed herein are a methacrylic resin composition suitably used for a color vision correction lens or an optical tool for color vision correction having the function of correcting color vision of a person with a protan defect, a color vision correction lens, and an optical tool for color vision correction.

The methacrylic resin composition, the color vision correction lens, and the optical tool for color vision correction contain a methacrylic resin, a dye A having an absorption maximum wavelength in the range of 530 to 570 nm, a dye B having an absorption maximum wavelength in the range of 470 to 510 nm, and an ultraviolet absorber U having an absorption maximum wavelength in the range of 330 to 380 nm, and
satisfy the following formulas (1) to (3):

$$3 < (a \times \alpha) + (b \times \beta) < 20 \qquad (1)$$

$$1.0 < (b \times \beta)/(a \times \alpha) < 7.0 \qquad (2)$$

$$0.1 \leq u \leq 1.0 \qquad (3)$$

(wherein a and b are respectively concentrations (ppm by mass) of the dye A and the dye B, u is a content (% by mass) of the ultraviolet absorber U, and
$\alpha$ or $\beta$ is an absorbance at the absorption maximum wavelength of the dye A or the dye B measured using a methyl methacrylate solution containing 1 ppm by mass of the dye A or the dye B at an optical path length of 20 mm).

EP 4 495 641 A1

Fig. 1

**Description**

TECHNICAL FIELD

The present invention relates to a methacrylic resin composition, a color vision correction lens, and an optical tool for color vision correction.

BACKGROUND ART

The retina of a human eye has three types of cone cells: L cones sensitive to red light, M cones sensitive to green light, and S cones sensitive to blue light, and they have visual pigments responding to different wavelength characteristics. A human can have normal color vision when these cones normally function.

On the other hand, color vision defect generally means a state where it is difficult to perceive differences between some colors that most people can distinguish, and is considered to be caused by a malfunction of at least one of the three types of cone cells.

Color vision correction filters are known as optical tools to support the color identification ability of persons who congenitally have such color vision defect (also referred to as (congenital) color vision defectives).

For example, Patent Document 1 discloses an optical filter with a transmission spectrum having a valley in the range of 400 to 450 nm, a peak in the range of 450 to 525 nm, a valley in the range of 525 to 595 nm, and a peak in the range of 595 nm or more, wherein a minimum or maximum value of transmittance in each of the above wavelength ranges satisfies a specific relationship.

According to Patent Document 1, the optical filter improves visibility of green traffic lights while having the function of correcting color vision by reducing the transmittance of green light, and therefore can be used as a color vision correction filter for color vision defectives having color vision characteristics of strong sensitivity to green colors.

However, color vision defect includes not only color vison defect having color vision characteristics of strong sensitivity to green colors but also protan defect such that red colors cannot normally be perceived. For example, persons with a protan defect cannot normally perceive red colors due to a malfunction of L cone cells, and therefore may suffer inconvenience in their daily lives. According to Investigation and Research Report on Facilitation of Movement etc. of Persons with Color Vision Defects made by Policy Bureau, Ministry of Land, Infrastructure, Transport and Tourism in 2013, examples of a situation where red colors used are not easy to notice for persons with a protan defect or persons with a protan defect have difficulty in visually recognizing red colors used include information about traffic jams on expressways displayed on LED monitors during the day, information about the next railway station in trains, emergency buttons per se, "you are here" signs in vicinity maps, fares (characters) displayed in buttons in ticketing machines, and characters in rate tables (displayed on LED monitors) in buses.

However, the optical filter disclosed in Patent Document 1 cannot sufficiently support color vision defect of a person with a protan defect for its characteristics.

PRIOR ART DOCUMENT

PATENT DOCUMENT

Patent Document 1: JP-A-2021-71548

SUMMARY OF THE INVENTION

PROBLEMS TO BE SOLVED BY THE INVENTION

It is an object of the present invention to provide a methacrylic resin composition suitably used for a color vision correction lens or an optical tool for color vision correction having the function of correcting color vision of a person with a protan defect. It is another object of the present invention to provide a color vision correction lens and an optical tool for color vision correction using the methacrylic resin composition.

MEANS FOR SOLVING THE PROBLEM

Specifically, the objects of the present invention have been achieved by the following means.

[1] A methacrylic resin composition containing: a methacrylic resin; a dye A having an absorption maximum wavelength in a wavelength range of 530 to 570 nm; a dye B having an absorption maximum wavelength in a wavelength range of 470 to 510 nm; and an ultraviolet absorber U having an absorption maximum wavelength in a wavelength range of 330 to 380 nm,

the methacrylic resin composition satisfying the following formulas (1) to (3):

$$3 < (a \times \alpha) + (b \times \beta) < 20 \qquad (1)$$

$$1.0 < (b \times \beta)/(a \times \alpha) < 7.0 \qquad (2)$$

(wherein a is a concentration of the dye A in the methacrylic resin composition, $\alpha$ is an absorbance at the absorption maximum wavelength of the dye A,
b is a concentration of the dye B in the methacrylic resin composition, $\beta$ is an absorbance at the absorption maximum wavelength of the dye B,
units of the a and the b are ppm by mass, and
the $\alpha$ or the $\beta$ is a value measured using a methyl methacrylate solution with a concentration of the dye A or the dye B of 1 ppm by mass under a condition of an optical path length of 20 mm),

$$0.1 \leq u \leq 1.0 \qquad (3)$$

(wherein u is a content of the ultraviolet absorber U in the methacrylic resin composition, and a unit of the u is % by mass).

[2] The methacrylic resin composition according to [1], which contains a dye C having an absorption maximum wavelength in a wavelength range of 420 to 460 nm and satisfies the following formula (4):

$$1 \leq c \leq 12 \qquad (4)$$

(wherein c is a concentration of the dye C in the methacrylic resin composition and a unit of the c is ppm by mass) .
[3] The methacrylic resin composition according to [1] or [2], wherein the a is 10 to 100 ppm by mass, and the $\alpha$ is 0.04 to 0.14.
[4] The methacrylic resin composition according to any one of [1] to [3], wherein the b is 80 to 330 ppm by mass, and the $\beta$ is 0.01 to 0.11.
[5] The methacrylic resin composition according to any one of [1] to [4], wherein the dye A contains at least one selected from among an anthraquinone-based dye, an azo-based dye, and a pyrimidine-based dye.
[6] The methacrylic resin composition according to any one of [1] to [5], wherein the dye B contains at least one selected from among a perinone-based dye and an azo-based dye.
[7] The methacrylic resin composition according to any one of [1] to [6], wherein the ultraviolet absorber U contains at least one selected from among a benzotriazole-based ultraviolet absorber and a triazine-based ultraviolet absorber.
[8] A color vision correction lens obtained by molding the methacrylic resin composition according to any one of [1] to [7] into a lens shape.
[9] An optical tool for color vision correction comprising the methacrylic resin composition according to any one of [1] to [7].

EFFECT OF THE INVENTION

The methacrylic resin composition according to the present invention exhibits the function of correcting or supporting protan defect because its transmittance in a red region is higher than in a region other than a red region and its transmittance in a region other than a red region is also maintained at a certain level. Therefore, the methacrylic resin composition according to the present invention can suitably be used as a material for a color vision correction lens or an optical tool for color vision correction that can be used for persons with a protan defect.
Further, the color vision correction lens and the optical tool for color vision correction according to the present invention have an excellent color vision correction function for persons with a protan defect.

BRIEF DESCRIPTION OF THE DRAWINGS

Fig. 1 shows transmission spectra of flat plates of Examples 1 to 3 obtained by molding methacrylic resin compositions according to the present invention.

Fig. 2 shows transmission spectra of flat plates of Examples 4 to 6 obtained by molding methacrylic resin compositions according to the present invention.

Fig. 3 shows transmission spectra of flat plates of Examples 7 to 9 obtained by molding methacrylic resin compositions according to the present invention.

Fig. 4 shows transmission spectra of flat plates of Comparative examples 1 to 3 obtained by molding methacrylic resin compositions for comparison.

MODES FOR CARRYING OUT THE INVENTION

In the present invention and the present specification, a numerical value range expressed using "to" means a range including numerical values before and after "to" as a lower limit and an upper limit, respectively.

In the transmission spectrum of a methacrylic resin composition according to the present invention, a red region means a wavelength range of about 640 to 770 nm, a region other than a red region means a wavelength range of about 380 to 640 nm, and a blue to green region means a wavelength range of about 440 to 570 nm.

[Methacrylic resin composition]

The methacrylic resin composition according to the present invention contains a methacrylic resin, a dye A having an absorption maximum wavelength in a wavelength range of 530 to 570 nm (hereinafter also simply referred to as "dye A"), a dye B having an absorption maximum wavelength in a wavelength range of 470 to 510 nm (hereinafter also simply referred to as "dye B"), and an ultraviolet absorber U having an absorption maximum wavelength in a wavelength range of 330 to 380 nm (hereinafter also simply referred to as "ultraviolet absorber U"), and the dye A, the dye B, and the ultraviolet absorber U contained in the methacrylic resin composition satisfy the following formulas (1) to (3).

In the methacrylic resin composition according to the present invention, the dye A, the dye B, and the ultraviolet absorber U are dispersed (preferably dissolved) in the methacrylic resin so that a molded body, such as a color vision correction lens, using the methacrylic resin composition according to the present invention has a specific transmission spectrum derived from the dye A, the dye B, and the ultraviolet absorber U. The dispersion may either be a state where the concentrations of the components are uniform (the components are uniformly dispersed) or a state where the concentrations of the components are randomly or regularly varied to the extent that a desired function is not impaired.

The methacrylic resin composition according to the present invention has higher transmittance in a red region than in a region other than a red region and maintains a certain level of transmittance also in a region other than a red region, which makes it possible to obtain a color vision correction lens having a color vision correction function for a person with a protan defect who can normally visually recognize colors other than red (e.g., blue and green) but has difficulty in visually recognizing red colors.

It should be noted that the phrase "maintains a certain level of transmittance also in a region other than a red region" means that transmittance in a region other than a red region is also maintained at a level such that there is no problem for visual recognition (normal visual recognition is not significantly impaired) and a uniform color balance in a blue to green region is guaranteed.

The reason for this is considered as follows.

The methacrylic resin composition according to the present invention contains the dye A and the dye B to reduce transmittance in a blue to green region. Specifically, the dye A and the dye B satisfy $3 < [(a \times \alpha) + (b \times \beta)]$ in a formula (1) that will be described later, which makes transmittance in a red region higher than transmittance in a region other than a red region, mainly including a blue to green region, to the extent that a desired color vision correction function is achieved, and the dye A and the dye B satisfy $[(a \times \alpha) + (b \times \beta)] < 20$, which makes it possible to maintain transmittance also in a region other than a red region, mainly including a blue to green region, at a level such that there is no problem for visual recognition. Further, the ratio of absorption of the dye B to absorption of the dye A $[(b \times \beta) / (a \times \alpha)]$ is set within a specific range specified by a formula (2) that will be described later, and the content u of the ultraviolet absorber U is set within a specific range specified by a formula (3) that will be described later so that absorption of the ultraviolet absorber U in a blue region falls within a specific range, which makes it possible to guarantee a uniform color balance to the extent that persons with a protan defect can normally visually recognize colors in a blue to green region.

In the present invention, when each of the dyes A and B and a dye C has absorption maximum at two or more wavelengths in a specified wavelength range in which absorption maximum is observed at a certain wavelength, the wavelength of absorption maximum at which absorbance is maximum is defined as an absorption maximum wavelength. Similarly, when the ultraviolet absorber U has absorption maximum at two or more wavelengths in a specified wavelength range in which absorption maximum is observed at a certain wavelength, the wavelength of absorption maximum at which absorbance is maximum is defined as an absorption maximum wavelength.

Further, in the present invention, the absorption maximum wavelength of each of the dyes A to C and the ultraviolet absorber U is a value measured using a methyl methacrylate solution of the dye or the ultraviolet absorber. Specifically, the absorption maximum wavelength can be measured by a method that will be described later in Examples.

In the present invention, an absorbance $\alpha$ at the absorption maximum wavelength of the dye A or an absorbance $\beta$ at the absorption maximum wavelength of the dye B is a value measured by a method that will be described later in Examples using a methyl methacrylate solution with a concentration of the dye A or the dye B of 1 ppm by mass under the condition of an optical path length of 20 mm.

In the methacrylic resin composition according to the present invention, the dye A and the dye B are contained so that the relationships represented by the following formulas (1) and (2) are satisfied:

$$3 < (a \times \alpha) + (b \times \beta) < 20 \qquad (1)$$

$$1.0 < (b \times \beta)/(a \times \alpha) < 7.0 \qquad (2)$$

(wherein a is a concentration of the dye A in the methacrylic resin composition and means the ratio of the amount of the dye A relative to the total amount (100 mass%) of all the components constituting the methacrylic resin composition according to the present invention, $\alpha$ is an absorbance at the absorption maximum wavelength of the dye A, when two or more types of dyes A are contained, "a $\times$ $\alpha$" in the formula (1) means the sum of values of a $\times$ $\alpha$ of the dyes,

b is a concentration of the dye B in the methacrylic resin composition and means the ratio of the amount of the dye B relative to the total amount (100 mass%) of all the components constituting the methacrylic resin composition according to the present invention, $\beta$ is an absorbance at the absorption maximum wavelength of the dye B, when two or more types of dyes B are contained, "b $\times$ $\beta$" in the formula (2) means the sum of values of b $\times$ $\beta$ of the dyes, units of the a and the b are ppm by mass, and

the $\alpha$ or the $\beta$ is a value measured using a methyl methacrylate solution with a concentration of the dye A or the dye B of 1 ppm by mass under the condition of an optical path length of 20 mm).

The lower limit of value of [(a $\times$ $\alpha$) + (b $\times$ $\beta$)] specified in the above formula (1) is preferably 5 or more, more preferably 7 or more. The upper limit of value of [(a $\times$ $\alpha$) + (b $\times$ $\beta$)] specified in the above formula (1) is preferably 18 or less, more preferably 17 or less, even more preferably 16 or less.

The lower limit of value of [(b $\times$ $\beta$) / (a $\times$ $\alpha$)] specified in the above formula (2) is preferably 1.1 or more, more preferably 1.2 or more. The upper limit of value of [(b $\times$ $\beta$) / (a $\times$ $\alpha$)] specified in the above formula (2) is preferably 6.5 or less, more preferably 6.0 or less.

In the methacrylic resin composition according to the present invention, the ultraviolet absorber U is contained so that the following formula (3) is satisfied:

$$0.1 \leq u \leq 1.0 \qquad (3)$$

(wherein u is a content of the ultraviolet absorber U in the methacrylic resin composition and means the ratio of the amount of the ultraviolet absorber U (when two or more types of ultraviolet absorbers are contained, the ratio of the total amount of the ultraviolet absorbers) relative to the total amount (100 mass%) of all the components constituting the methacrylic resin composition according to the present invention, and a unit of the u is % by mass).

The content u of the ultraviolet absorber U specified in the above formula (3) is preferably 0.2 to **0.8** mass%, more preferably 0.3 to **0.7** mass%.

<Methacrylic resin>

The methacrylic resin constituting the methacrylic resin composition according to the present invention is a resin having 50 parts by mass or more of a monomer unit derived from methacrylic acid or a methacrylic acid ester.

The methacrylic resin has excellent transparency and weatherability and is therefore used for eye glasses, contact lenses, automobile parts, signboards and signages, and thin displays.

The methacrylic resin is preferably a resin containing a monomer unit derived from methyl methacrylate and a monomer unit derived from an acrylic acid ester, and the resin is obtained by polymerization of a monomer component containing methyl methacrylate and an acrylic acid ester. The content of the monomer unit derived from methyl methacrylate and the content of the monomer unit derived from an acrylic acid ester in the methacrylic resin may appropriately be selected, but it is preferred that the content of the monomer unit derived from methyl methacrylate is 85 to 100 parts by mass and the content of the monomer unit derived from an acrylic acid ester is 0 to 15 parts by mass, and it is more preferred that the content of the monomer unit derived from methyl methacrylate is 90 to 100 parts by mass and the content of the monomer unit derived from an acrylic acid ester is 0 to 10 parts by mass. In this regard, the total amount of the monomer unit derived from methyl methacrylate and the monomer unit derived from an acrylic acid ester is taken as 100 parts by mass. When the content of the monomer unit derived from methyl methacrylate and the content of the monomer unit derived from an acrylic acid ester are within their respective ranges described above, the heat resistance of the methacrylic resin can be enhanced.

Examples of the acrylic acid ester include methyl acrylate, ethyl acrylate, propyl acrylate, n-butyl acrylate, sec-butyl acrylate, tert-butyl acrylate, cyclohexyl acrylate, and 2-ethylhexyl acrylate. Among them, methyl acrylate and ethyl acrylate are preferred. It should be noted that these acrylic acid esters may be used singly or in combination of two or more of them.

A polymerization method used for polymerization of the monomer component may be, for example, a publicly-known polymerization method such as suspension polymerization, solution polymerization, or bulk polymerization. Among them, bulk polymerization is preferred. Bulk polymerization may be performed in either a batch or continuous manner. For example, a polymer can be obtained with high productivity by a method in which a monomer component, a polymerization initiator, etc. are continuously supplied into a reaction container and a partially polymerized product is continuously discharged after retention for a predetermined time in the reaction container.

Examples of the polymerization initiator used for polymerization of the monomer component include publicly-known radical polymerization initiators such as an azo compound (e.g., azobisisobutyronitrile) and a peroxide (e.g., 1,1-di (tert-butylperoxy) cyclohexane) . It should be noted that these polymerization initiators may be used singly or in combination of two or more of them.

If necessary, a chain transfer agent may be used for polymerization of the monomer component. Preferred examples of the chain transfer agent include mercaptans such as n-butyl mercaptan, n-octyl mercaptan, n-dodecyl mercaptan, and 2-ethylhexylthioglycolate. It should be noted that these chain transfer agents may be used singly or in combination of two or more of them.

The molecular weight distribution index of the methacrylic resin used in the present invention, which is defined as weight average molecular weight/number average molecular weight, is preferably 1.8 to 6.0. Particularly, in order to obtain a methacrylic resin having a molecular weight distribution index of 2.2 or more, a known polymerization method such as a method using various types of radical polymerization initiators, a method using various types of chain transfer agents, or a method in which multiple polymerization steps are combined is appropriately used. The molecular weight distribution index can be measured by gel permeation chromatography (GPC).

The methacrylic resin having a molecular weight distribution index of 2.2 or more may be produced by mixing two or more types of methacrylic resins different in weight average molecular weight. Examples of a method for mixing two or more types of methacrylic resins include melt kneading, solvent kneading, and dry blending, and from the viewpoint of productivity, melt kneading and dry blending are preferred. Examples of a device used for mixing include conventional mixers and kneaders, and specific examples thereof include a single screw kneading extruder, a twin screw kneading extruder, a ribbon blender, a Henschel mixer, a Banbury mixer, and a drum tumbler.

The methacrylic resin used in the present invention may be synthesized in such a manner as described above or may be a commercially-available product. Examples of the commercially-available product include SUMIPEX (trade name) Series manufactured by SUMITOMO CHEMICAL COMPANY, LIMITED.

The content of the methacrylic resin (when two or more types of methacrylic resins are contained, the total content thereof) in the methacrylic resin composition according to the present invention is usually more than 99.0 mass%, preferably more than 99.2 mass%, more preferably more than 99.3 mass% relative to the total amount (100 mass%) of all the components constituting the methacrylic resin composition. The upper limit of the content is not limited, but is usually less than 99.9 mass%, preferably less than 99.8 mass%, more preferably less than 99.7 mass%.

<Dye A>

The methacrylic resin composition according to the present invention contains a dye A. The dye A is a red to purple dye having an absorption maximum wavelength in a wavelength range of 530 to 570 nm.

The wavelength range in which the absorption maximum wavelength of the dye A falls is preferably 530 to 560 nm, more preferably 530 to 550 nm.

Examples of the dye A include an anthraquinone-based dye, an azo-based dye, and a pyrimidine-based dye, and at least one selected from among an anthraquinone-based dye, an azo-based dye, and a pyrimidine-based dye is preferably contained.

Specific examples of the dye A include: anthraquinone-based dyes such as Solvent Red 52, Solvent Red 145, Solvent Red 150, Solvent Red 151, Disperse Violet 26, and Disperse Violet 28; azo-based dyes such as Solvent Red 195; and pyrimidine-based dyes such as Solvent Red 149.

These dyes A may be used singly or in combination of two or more of them.

The above-described concentration a of the dye A is preferably 10 to 100 ppm by mass.

The absorbance $\alpha$ at the absorption maximum wavelength of the dye A is preferably 0.04 to 0.14, more preferably 0.05 to 0.13, even more preferably 0.06 to 0.12.

When the concentration a of the dye A is within its preferred range and/or the absorbance $\alpha$ at the absorption maximum wavelength of the dye A is within its preferred range, the methacrylic resin composition according to the present invention can easily be prepared so that the above formulas (1) and (2) are satisfied.

<Dye B>

The methacrylic resin composition according to the present invention contains a dye B. The dye B is an orange to red dye having an absorption maximum wavelength in a wavelength range of 470 to 510 nm.

The wavelength range in which the absorption maximum wavelength of the dye B falls is preferably 480 to 510 nm, more preferably 490 to 510 nm.

Examples of the dye B include a perinone-based dye and an azo-based dye, and at least one selected from among a perinone-based dye and an azo-based dye is preferably contained.

Specific examples of the dye B include: a perinone-based dye such as Solvent Red 135, Solvent Red 179, and Solvent Orange 60; and an azo-based dye such as Solvent Red 143.

These dyes B may be used singly or in combination of two or more of them.

The above-described concentration b of the dye B is preferably 80 to 330 ppm by mass.

The absorbance $\beta$ at the absorption maximum wavelength of the dye B is preferably 0.01 to 0.11, more preferably 0.02 to 0.10, even more preferably 0.03 to 0.09.

When the concentration b of the dye B is within its preferred range and/or the absorbance $\beta$ at the absorption maximum wavelength of the dye B is within its preferred range, the methacrylic resin composition according to the present invention can easily be prepared so that the above formulas (1) and (2) are satisfied.

<Ultraviolet absorber U>

The methacrylic resin composition according to the present invention contains an ultraviolet absorber U. The ultraviolet absorber U is a material having an absorption maximum wavelength in a wavelength range of 330 to 380 nm. When the methacrylic resin composition according to the present invention contains an ultraviolet absorber U, deterioration of the methacrylic resin due to ultraviolet light is prevented, and in addition to that, when the ultraviolet absorber is added in a certain amount so that the above formula (3) is satisfied, an increase in transmittance in a blue region is prevented so that a uniform color balance in a blue to green region can be guaranteed.

The wavelength range in which the absorption maximum wavelength of the ultraviolet absorber U falls is preferably 330 to 370 nm, more preferably 340 to 360 nm.

Examples of the ultraviolet absorber U include a benzotriazole-based ultraviolet absorber and a triazine-based ultraviolet absorber, and at least one selected from among a benzotriazole-based ultraviolet absorber and a triazine-based ultraviolet absorber is preferably contained.

Examples of the benzotriazole-based ultraviolet absorber include 2-(2'-hydroxy-3'-t-butyl-5'-methylphenyl)-5-chlorobenzotriazole (e.g., Sumisorb 300 (manufactured by Sumika Chemtex Company, Limited), Tinuvin 326 (manufactured by BASF)), 2-(2-hydroxy-5-methylphenyl)benzotriazole (e.g., Sumisorb 200 (manufactured by Sumika Chemtex Company, Limited), Tinuvin P (manufactured by BASF)), 2-[2-hydroxy-3-(4,5,6,7-tetrahydro-1,3-dioxo-1H-isoindol-2-ylmethyl)-5-methylphenyl]-2H-benzotriazole (e.g., Sumisorb 250 (manufactured by Sumika Chemtex Company, Limited), SEESORB 706 (manufactured by SHIPRO KASEI KAISHA, LTD.)), 2-(2-hydroxy-5-tert-octylphenyl)benzotriazole (e.g., Sumisorb 340 (manufactured by Sumika Chemtex Company, Limited), Tinuvin 329 (manufactured by BASF), SEESORB 709 (manufactured by SHIPRO KASEI KAISHA LTD.)), 2,2'-methylenebis[6-(benzotriazol-2-yl)-4-tert-octylphenol] (e.g., ADEKA STAB LA-31 (manufactured by ADEKA CORPORATION) and Tinuvin 360 (manufactured by BASF), and 2-(2-hydroxy-5-methylphenyl)benzotriazole (e.g., LA-32 (manufactured by ADEKA CORPORATION)).

An example of the triazine-based ultraviolet absorber includes 2,4,6-tris[4-(hexyloxy)-2-hydroxy-3-methylphenyl]-1,3,5-triazine (e.g., LA-F70 (manufactured by ADEKA CORPORATION) .

These ultraviolet absorbers U may be used singly or in combination of two or more of them.

The content u of the ultraviolet absorber U is as described above.

The methacrylic resin composition according to the present invention may contain a dye other than the dye A**,** the dye **B,** and the ultraviolet absorber U (hereinafter referred to as "another dye") to the extent that the effects of the present invention are exhibited. Specifically, the methacrylic resin composition according to the present invention containing the dye A**,** the dye B**,** and the ultraviolet absorber U so that the above formulas (1) to (3) are satisfied may contain another dye as long as the methacrylic resin composition has higher transmittance in a red region than in a region other than a red region and maintains a certain level of transmittance also in a region other than a red region.

It should be noted that the phrase "has higher transmittance in a red region than in a region other than a red region" means that all the transmittances in a red region corresponding to a wavelength range of 640 to 770 nm are higher than all the transmittances in a region other than a red region corresponding to a wavelength range of 380 to 640 nm.

When the methacrylic resin composition according to the present invention is molded to obtain a molded body, all the transmittances in a red region may usually be 70% or more and are preferably 80% or more, more preferably 90% or more. The upper limit of the transmittance in a red region is not limited but is 95% or less from a practical viewpoint.

When the methacrylic resin composition according to the present invention is molded to obtain a molded body, all the transmittances in a blue to green region corresponding to a wavelength range of 440 to 570 nm may be in the range of about 5 to 65% and are preferably in the range of 5 to 60%.

In order to guarantee a uniform color balance such that persons with a protan defect can normally visually recognize colors in a blue to green region, the ratio between the maximum value and minimum value (minimum value/maximum value) of transmittance in a blue to green region is preferably 0.10 or more, more preferably 0.15 or more, even more preferably 0.20 or more. It should be noted that the upper limit of the ratio between the maximum value and minimum value (minimum value/maximum value) of transmittance in a blue to green region is preferably as close as possible to 1.0.

The methacrylic resin composition according to the present invention may contain, as the another dye, a dye exhibiting absorption in a red region to the extent that the effects of the present invention are not impaired, but preferably does not contain such a dye.

An example of the another dye that the methacrylic resin composition according to the present invention may contain includes a dye C that will be described below.

<Dye C>

The methacrylic resin composition according to the present invention preferably contains a dye C having an absorption maximum wavelength in a wavelength range of 420 to 460 nm (also simply referred to as "dye C").

The wavelength range in which the absorption maximum wavelength of the dye C falls is preferably 430 to 450 nm.

When the methacrylic resin composition according to the present invention contains a dye C, the waveform of transmission spectrum of the methacrylic resin composition according to the present invention can be adjusted so that the waveform of the transmission spectrum in a blue to green region of about 440 to 570 nm is flat, which makes it easy to adjust the ratio between the maximum value and minimum value (minimum value/maximum value) of transmittance in such a blue to green region to fall within its preferred range.

Examples of the dye C include quinophthalone-based dyes, and a quinophthalone-based dye is preferably contained.

Specific examples of the dye C include quinophthalone-based dyes such as Disperse Yellow 54, Solvent Yellow 33, and Solvent Yellow 157.

These dyes C may be used singly or in combination of two or more of them.

When the methacrylic resin composition according to the present invention contains a dye C, the dye C is preferably contained in the methacrylic resin composition according to the present invention so that the following formula (4) is satisfied:

$$1 \leq c \leq 12 \quad (4)$$

(wherein c is a concentration of the dye C in the methacrylic resin composition and means the ratio of the amount of the dye C (when two or more types of dyes C are contained, the ratio of the total amount of the dyes C) relative to the total amount (100 mass%) of all the components constituting the methacrylic resin composition according to the present invention, and a unit of the c is ppm by mass).

The concentration c of the dye C specified in the above formula (4) is preferably 1.5 to 12 ppm by mass, more preferably 2 to 10 ppm by mass.

When the concentration c of the dye C is within its preferred range described above, the waveform of the transmission spectrum in a blue to green region can be adjusted to be flat.

<Another component>

The methacrylic resin composition according to the present invention may contain an additive such as a release agent, a polymerization inhibitor, a flame retarder, or a reinforcing agent.

(Antioxidant)

The methacrylic resin composition according to the present invention may contain an antioxidant. When the methacrylic resin composition according to the present invention contains an antioxidant, oxidation of the methacrylic resin is prevented so that excellent weatherability can be achieved. The term "antioxidant" as used herein refers to a component having the function of preventing oxidation of the methacrylic resin.

Examples of the antioxidant include a hindered amine-based antioxidant, a phenol-based antioxidant, and a phosphorus-based antioxidant. The antioxidant is preferably a hindered amine-based antioxidant, a phosphorus-based antioxidant, or a combination of both of them.

These antioxidants may be used singly or in combination of two or more of them.

When the methacrylic resin composition according to the present invention contains an antioxidant, the content of the antioxidant (when two or more types of antioxidants are contained, the ratio of the total amount of the antioxidants) relative to the total amount of (100 mass%) of all the components constituting the methacrylic resin composition according to the present invention is preferably 0.03 to 1 mass%, more preferably 0.05 to 0.3 mass%, even more preferably 0.05 to 0.2 mass%. When the content of the antioxidant is equal to or more than the above lower limit, oxidation of the methacrylic resin can further be prevented so that a methacrylic resin composition having excellent weatherability can be obtained. When the content of the antioxidant is equal to or less than the above upper limit, a methacrylic resin composition having an excellent color is obtained. In addition to that, it is possible to prevent mold pollution when the methacrylic resin composition is molded.

<Molded body and intended use>

The form of the methacrylic resin composition according to the present invention is not limited and may be a molded body formed according to the intended use. The methacrylic resin composition according to the present invention also includes a mixture containing the components (the dyes A and B, the ultraviolet absorber U, the methacrylic resin) constituting the methacrylic resin composition according to the present invention in a predetermined content ratio.

The molded body of the methacrylic resin composition according to the present invention can be used for color vision correction, and examples thereof include a sheet-shaped color vision correction sheet, a lens-shaped color vision correction lens, and a goggle molded into a desired shape. The shapes, thicknesses, and sizes of these molded bodies can appropriately be adjusted to the extent that transmittances required of the molded bodies (products) are satisfied.

Specifically, the methacrylic resin composition according to the present invention can be used for optical tools for color vision correction such as signboards considering color vision defects, eye glasses (monocles, nose spectacles, lorgnettes), attachment lenses for eye glasses, contact lenses, intraocular lenses, and goggles.

The molded body of the methacrylic resin composition according to the present invention can be obtained by any of various molding methods, but is preferably obtained by injection molding. Specifically, the molded body of the methacrylic resin composition according to the present invention can be obtained by injecting and charging, as a molding material, a mixture of the components (the dyes A and B, the ultraviolet absorber U, and the methacrylic resin) constituting the methacrylic resin composition according to the present invention into the cavity of a mold in a molten state and then taking out a molded body from the mold after cooling. More specifically, the molded body of the methacrylic resin composition according to the present invention can be produced by, for example, feeding pellets of the methacrylic resin composition according to the present invention into a cylinder through a hopper, melting the methacrylic resin composition while rotating a screw, retracting the screw to charge a predetermined amount of the methacrylic resin composition into the cylinder, injecting and charging the melted methacrylic resin composition into a mold while applying a pressure by advancing the screw, keeping the pressure for a certain time until the mold is sufficiently cooled, and opening the mold to take out a molded body. Various conditions (e.g., the temperature in the cavity, the melting temperature of the molding material, the temperature of the mold when the molding material is injected into the mold, and the pressure at which the resin composition charged into the mold is kept) for producing a molded body of the methacrylic resin composition according to the present invention are not limited and may appropriately be set.

EXAMPLES

Hereinbelow, the present invention will be described with reference to examples, but the present invention is not limited thereto.

Absorption spectra of dyes and an ultraviolet absorber used in Examples and Comparative examples were measured in the following manner to determine their absorption maximum wavelengths and absorption coefficients. The results are summarized in Table 1.

(Measurement of absorption spectrum)

As a measurement sample, a methyl methacrylate solution with a concentration of the dye or the ultraviolet absorber of 1 ppm by mass was prepared, and the absorbance was measured every 1 nm in a wavelength range of 330 to 800 nm at an optical path length of 20 mm using "U-4000 Spectrophotometer (trade name)" manufactured by Hitachi High-Tech Corporation. From the obtained absorption spectrum, "absorption maximum wavelength" was determined in such a manner as described above, and the absorbance at this absorption maximum wavelength was defined as "absorption coefficient".

[Table 1]

Table 1

| | Absorption maximum wavelength (unit: nm) | Absorption coefficient (unit: none) |
|---|---|---|
| Dye A-1 (Trade name: Sumiplast Bordeux. HBL, manufactured by Sumitomo Chemtex Company, Limited, (D.V.26)) | 542 | 0.0737 |
| Dye A-2 (Trade name: FDG-001, manufactured by YAMADA CHEMICAL CO., LTD.) | 547 | 0.1500 |
| Dye B-1 (Trade name: Sumiplast Red. H3G, manufactured by Sumitomo Chemtex Company, Limited, S.R.135) | 501 | 0.0428 |
| Dye C-1 (Trade name: Sumiplast Yellow. HLR, manufactured by Sumitomo Chemtex Company, Limited, (D.Y.54) | 444 | 0.4114 |
| Dye C-2 (Trade name: FDB-003, manufactured by YAMADA CHEMICAL CO., LTD.) | 420 | 1.0012 |
| Ultraviolet absorber U-1 (Trade name: Sumisorb 300, manufactured by Sumitomo Chemtex Company, Limited) | 345 | 0.1225 |

(Examples 1 to 9)

A methacrylic resin ("SUMIPEX MH (trade name)" manufactured by SUMITOMO CHEMICAL COMPANY, LIMITED), dyes, and an ultraviolet absorber were mixed in ratios shown in Table 2. Each of the thus obtained mixtures was melt-kneaded using a single screw extruder (screw diameter: 40 mm) so that a resin temperature reached 250°C and extruded into a strand, and the strand was cooled in water and cut with a strand cutter to obtain pellets. From the obtained pellets, a 100 mm square flat plate having a thickness of 2 mm was prepared at a molding temperature of 210°C using a hot compression molding machine.

In Table 2, units of the amounts of the dyes A-1, B-1, and C-1, the methacrylic resin, and the ultraviolet absorber U-1 mixed are indicated in parentheses.

[Table 2]

Table 2

| | Methacrylic resin (% by mass) | Dye A-1 (ppm by mass) | Dye B-1 (ppm by mass) | Dye C-1 (ppm by mass) | Ultraviolet absorber U-1 (% by mass) |
|---|---|---|---|---|---|
| Example 1 | 99.5 | 15 | 150 | 0 | 0.5 |
| Example 2 | 99.5 | 30 | 120 | 3 | 0.5 |
| Example 3 | 99.5 | 45 | 100 | 4.5 | 0.5 |
| Example 4 | 99.5 | 20 | 200 | 0 | 0.5 |
| Example 5 | 99.5 | 40 | 160 | 4 | 0.5 |

(continued)

| | Methacrylic resin (% by mass) | Dye A-1 (ppm by mass) | Dye B-1 (ppm by mass) | Dye C-1 (ppm by mass) | Ultraviolet absorber U-1 (% by mass) |
|---|---|---|---|---|---|
| Example 6 | 99.5 | 60 | 130 | 6 | 0.5 |
| Example 7 | 99.5 | 30 | 300 | 0 | 0.5 |
| Example 8 | 99.5 | 60 | 240 | 6 | 0.5 |
| Example 9 | 99.5 | 90 | 200 | 9 | 0.5 |

For each of the thus prepared flat plates, $a \times \alpha$, $b \times \beta$, $(a \times \alpha) + (b \times \beta)$, and $(b \times \beta)/(a \times \alpha)$ were calculated on the basis of Table 1 and Table 2.

It should be noted that for the calculation, the absorption coefficient (absorbance at absorption maximum wavelength) of the dye A-1 shown in Table 1 was used as $\alpha$, the absorption coefficient (absorbance at absorption maximum wavelength) of the dye B-1 shown in Table 1 was used as $\beta$, the concentration (unit: ppm by mass) of the dye A-1 shown in Table 2 was used as a, and the concentration (unit: ppm by mass) of the dye B-1 shown in Table 2 was used as b.

The results are summarized in Table 3.

[Table 3]

Table 3

| | $a \times \alpha$ | $b \times \beta$ | $(a \times \alpha) + (b \times \beta)$ | $(b \times \beta)/(a \times \alpha)$ |
|---|---|---|---|---|
| Example 1 | 1.11 | 6.42 | 7.53 | 5.8 |
| Example 2 | 2.21 | 5.14 | 7.35 | 2.3 |
| Example 3 | 3.32 | 4.28 | 7.60 | 1.3 |
| Example 4 | 1.47 | 8.56 | 10.0 | 5.8 |
| Example 5 | 2.95 | 6.85 | 9.80 | 2.3 |
| Example 6 | 4.42 | 5.56 | 10.0 | 1.3 |
| Example 7 | 2.21 | 12.8 | 15.1 | 5.8 |
| Example 8 | 4.42 | 10.3 | 14.7 | 2.3 |
| Example 9 | 6.63 | 8.56 | 15.2 | 1.3 |

(Comparative examples 1 to 3)

One-hundred-millimeter square flat plates having a thickness of 2 mm were prepared in the same manner as in Examples except that a methacrylic resin ("SUMIPEX MH (trade name)" manufactured by SUMITOMO CHEMICAL COMPANY, LIMITED) and dyes were mixed in ratios shown in Table 4.

In Table 4, units of the amounts of the dyes A-2 and C-2 and the methacrylic resin mixed are indicated in parentheses.

[Table 4]

Table 4

| | Methacrylic resin (% by mass) | Dye A-2 (ppm by mass) | Dye C-2 (ppm by mass) |
|---|---|---|---|
| Comparative example 1 | 99.99 | 90 | 16 |
| Comparative example 2 | 99.99 | 90 | 32 |

(continued)

|  | Methacrylic resin (% by mass) | Dye A-2 (ppm by mass) | Dye C-2 (ppm by mass) |
|---|---|---|---|
| Comparative example 3 | 99.96 | 36 | 320 |

For each of the thus prepared flat plates, a × α, b × β, (a × α) + (b × β), and (b × β) / (a × α) were calculated on the basis of Table 1 and Table 4.

It should be noted that for the calculation, the absorption coefficient (absorbance at absorption maximum wavelength) of the dye A-2 shown in Table 1 was used as α and the concentration (unit: ppm by mass) of the dye A-2 shown in Table 4 was used as a. A dye corresponding to the dye B was not contained, and therefore β and b were defined as zero.

The results are summarized in Table 5.

[Table 5]

Table 5

|  | a × α | b × β | (a × α) + (b × β) | (b × β) / (a × α) |
|---|---|---|---|---|
| Comparative example 1 | 13.5 | 0 | 13.5 | 0.0 |
| Comparative example 2 | 13.5 | 0 | 13.5 | 0.0 |
| Comparative example 3 | 5.40 | 0 | 5.40 | 0.0 |

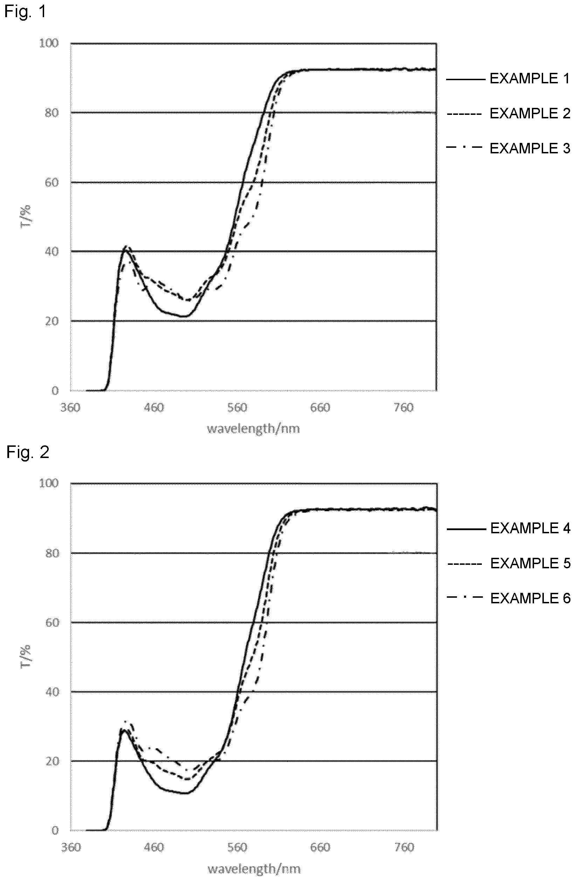

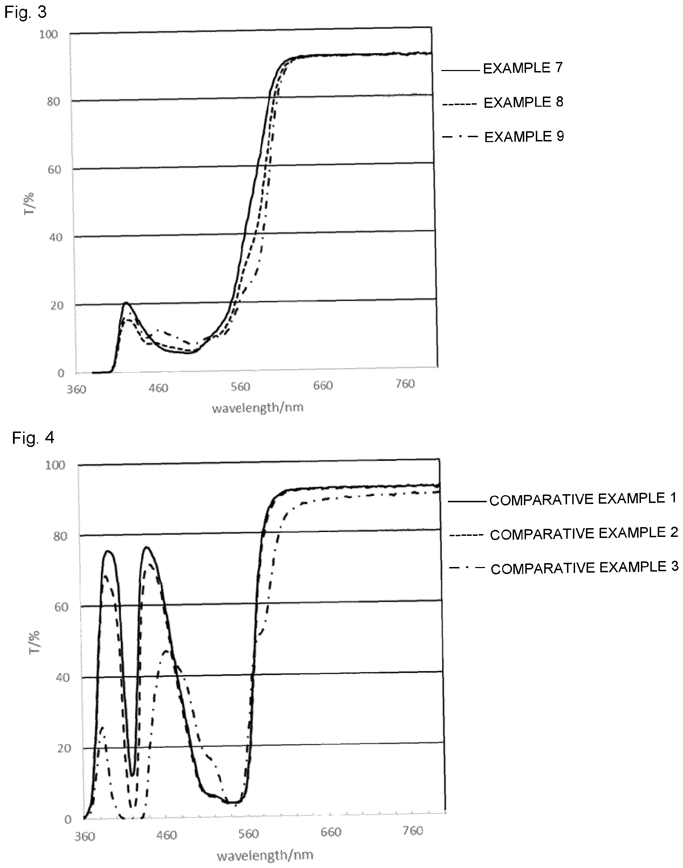

The spectral transmission spectrum of each of the prepared flat plates in the thickness direction (optical path length: 2mm) was measured every 1 nm in a wavelength range of 360 to 800 nm using "U-4000 Spectrophotometer (trade name)" manufactured by Hitachi High-Tech Corporation. Fig. 1 shows transmission spectra of the flat plates according to Examples 1 to 3. Fig. 2 shows transmission spectra of the flat plates according to Examples 4 to 6. Fig. 3 shows transmission spectra of the flat plates according to Examples 7 to 9. Fig. 4 shows transmission spectra of the flat plates according to Comparative examples 1 to 3.

From the results shown above in Tables 3 and 5 and Figs. 1 to 4, the following findings are obtained.

All the flat plates of Examples 1 to 9 obtained by molding the methacrylic resin compositions according to the present invention containing the dye A, the dye B, and the ultraviolet absorber U and satisfying the above formulas (1) to (3) have a transmittance in a red region of 90% or more that is higher than in a blue to green region, maintain a transmittance in a blue to green region of 5 to 60% that is at a level that does not cause a problem for normal visual recognition, and have a ratio of the maximum value and minimum value (minimum value/maximum value) of transmittance in a blue to green region of 0.10 or more so that a uniform color balance in a blue to green region is guaranteed. This indicates that the methacrylic resin composition according to the present invention is excellent as a material for color vision correction lenses or optical tools for color vision correction having the function of correcting color vision of persons with a protan defect.

On the other hand, all the flat plates of Comparative examples 1 to 3 obtained by molding the methacrylic resin compositions for comparison that did not contain the dye B and the ultraviolet absorber U and did not satisfy the above formulas (2) and (3) had a ratio of the maximum value and minimum value (minimum value/maximum value) of transmittance in a blue to green region of 0.06 or less, and therefore a uniform color balance in a blue to green region was not guaranteed.

INDUSTRIAL APPLICABILITY

The methacrylic resin composition according to the present invention and a molded body thereof can be used for optical tools for color vision correction such as signboards considering color vision defects, eye glasses (monocles, nose spectacles, lorgnettes), attachment lenses for eye glasses, contact lenses, intraocular lenses, and goggles and therefore has high applicability in the field of optics.

**Claims**

1. A methacrylic resin composition comprising: a methacrylic resin; a dye A having an absorption maximum wavelength in a wavelength range of 530 to 570 nm; a dye B having an absorption maximum wavelength in a wavelength range of 470 to 510 nm; and an ultraviolet absorber U having an absorption maximum wavelength in a wavelength range of 330 to 380 nm,

the methacrylic resin composition satisfying the following formulas (1) to (3):

$$3 < (a \times \alpha) + (b \times \beta) < 20 \qquad (1)$$

$$1.0 < (b \times \beta)/(a \times \alpha) < 7.0 \qquad (2)$$

(wherein a is a concentration of the dye A in the methacrylic resin composition, $\alpha$ is an absorbance at the absorption maximum wavelength of the dye A,
b is a concentration of the dye B in the methacrylic resin composition, $\beta$ is an absorbance at the absorption maximum wavelength of the dye B,
units of the a and the b are ppm by mass, and
the $\alpha$ or the $\beta$ is a value measured using a methyl methacrylate solution with a concentration of the dye A or the dye B of 1 ppm by mass under a condition of an optical path length of 20 mm),

$$0.1 \leq u \leq 1.0 \qquad (3)$$

(wherein u is a content of the ultraviolet absorber U in the methacrylic resin composition, and a unit of the u is % by mass).

2. The methacrylic resin composition according to claim 1, which contains a dye C having an absorption maximum wavelength in a wavelength range of 420 to 460 nm and satisfies the following formula (4):

$$1 \leq c \leq 12 \qquad (4)$$

(wherein c is a concentration of the dye C in the methacrylic resin composition and a unit of the c is ppm by mass) .

3. The methacrylic resin composition according to claim 1 or 2, wherein the a is 10 to 100 ppm by mass, and the $\alpha$ is 0.04 to 0.14.

4. The methacrylic resin composition according to any one of claims 1 to 3, wherein the b is 80 to 330 ppm by mass, and the $\beta$ is 0.01 to 0.11.

5. The methacrylic resin composition according to any one of claims 1 to 4, wherein the dye A contains at least one selected from among an anthraquinone-based dye, an azo-based dye, and a pyrimidine-based dye.

6. The methacrylic resin composition according to any one of claims 1 to 5, wherein the dye B contains at least one selected from among a perinone-based dye and an azo-based dye.

7. The methacrylic resin composition according to any one of claims 1 to 6, wherein the ultraviolet absorber U contains at least one selected from among a benzotriazole-based ultraviolet absorber and a triazine-based ultraviolet absorber.

8. A color vision correction lens obtained by molding the methacrylic resin composition according to any one of claims 1 to 7 into a lens shape.

9. An optical tool for color vision correction, comprising the methacrylic resin composition according to any one of claims 1 to 7.

Fig. 1

Fig. 2

Fig. 3

Fig. 4

## INTERNATIONAL SEARCH REPORT

| International application No. |
| --- |
| **PCT/JP2022/046173** |

**A. CLASSIFICATION OF SUBJECT MATTER**

*G02B 5/22*(2006.01)i; *G02C 7/00*(2006.01)i

According to International Patent Classification (IPC) or to both national classification and IPC

**B. FIELDS SEARCHED**

Minimum documentation searched (classification system followed by classification symbols)

G02B5/22; G02C7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2020-3646 A (PANASONIC INTELLECTUAL PROPERTY MANAGEMENT CO., LTD.) 09 January 2020 (2020-01-09)<br>paragraphs [0013]-[0014], [0019]-[0020], [0025]-[0034], [0070], [0096], [0106], [0109], fig. 9 | 1-9 |
| Y | JP 2012-219169 A (MITSUBISHI ENGINEERING PLASTICS CORP) 12 November 2012 (2012-11-12)<br>claims 3-4, paragraphs [0027], [0047], [0053] | 1-9 |
| Y | JP 2010-204383 A (IDEMITSU KOSAN CO LTD) 16 September 2010 (2010-09-16)<br>paragraphs [0012]-[0013], [0015], [0019] | 1-9 |
| Y | JP 2019-95492 A (SUMITOMO BAKELITE CO) 20 June 2019 (2019-06-20)<br>claims 1, 4-5, paragraph [0083] | 5-6 |

☐ Further documents are listed in the continuation of Box C.   ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **28 February 2023** | **07 March 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/046173**

| Patent document cited in search report | | | Publication date (day/month/year) | Patent family member(s) | Publication date (day/month/year) |
|---|---|---|---|---|---|
| JP | 2020-3646 | A | 09 January 2020 | US 2020/0004051 A1<br>paragraphs [0030], [0031],<br>[0036]-[0038], [0044]-[0052],<br>[0088], [0116], [0125], [0129],<br>fig. 9<br>DE 102019116904 A1<br>CN 110658578 A<br>TW 202018337 A | |
| JP | 2012-219169 | A | 12 November 2012 | (Family: none) | |
| JP | 2010-204383 | A | 16 September 2010 | (Family: none) | |
| JP | 2019-95492 | A | 20 June 2019 | (Family: none) | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021071548 A